# EUROPEAN PATENT APPLICATION

(11) **EP 4 843 831 A1**
(43) Date of publication of application: **25.11.2026**
(21) Application number: 25829957.7
(22) Date of filing: 19.06.2025
(51) Int. Cl.: B60R 9/04

(54) **LUGGAGE RACK, LUGGAGE RACK ASSEMBLY AND VEHICLE**

(30) Priority: 19.06.2024 CN 202410790629
(71) Applicant: Fuyao Glass Industry Group Co., Ltd., Fuzhou, Fujian 350300 (CN)
(72) Inventor: HUANG, Junqin, Fuzhou, Fujian 350300 (CN); YE, Taoming, Fuzhou, Fujian 350300 (CN); YU, Yusheng, Fuzhou, Fujian 350300 (CN); ZHANG, Zechuan, Fuzhou, Fujian 350300 (CN); SONG, Zhengcong, Fuzhou, Fujian 350300 (CN); ZHENG, Ying, Fuzhou, Fujian 350300 (CN)
(74) Representative: Gill Jennings & Every LLP
(86) International application number: PCT/CN2025/101904
(87) International publication number: WO 2025/261423

(57) **Abstract**

A luggage rack, a luggage rack assembly and a vehicle. The luggage rack assembly comprises longitudinal luggage rack rails (20), support members (30) and transverse luggage rack rails (40). The longitudinal luggage rack rails (20) are mounted on a vehicle roof (10), and are provided with holes (201) extending from top surfaces thereof to bottom surfaces thereof. The support members (30) are correspondingly arranged in the holes (201), and are connected and fixed to the vehicle roof (10). The transverse luggage rack rails (40) are connected and fixed to the support members (30) and are used for carrying luggage. By means of structural optimization design of the luggage rack, the mode in the prior art of the longitudinal luggage rack rails transferring and distributing loads of luggage to the vehicle roof (10) is changed to the support members (30) directly bearing the loads and transferring same to the vehicle roof (10), such that the longitudinal luggage rack rails (20) no longer bear the loads but instead only serve as appearance decorative parts of a vehicle. Thus, the wall thickness of the longitudinal luggage rack rails (20) can be reduced, a cross-sectional structural shape and an assembly method can be simplified, and the number of accessories can be reduced, achieving real lightweight design and reducing product production and manufacturing costs.

## Description

### CROSS-REFERENCE TO RELATED APPLICATIONS

This application claims priority to Chinese Patent Application No. 2024107906294, filed on June 19, 2024, entitled "LUGGAGE RACK, LUGGAGE RACK ASSEMBLY AND VEHICLE", the entire content of which is incorporated herein by reference in its entirety.

### TECHNICAL FIELD

The present disclosure relates to the technical field of vehicles, and in particular, to a luggage rack, a luggage rack assembly, and a vehicle.

### BACKGROUND

Luggage rack is a dedicated device mounted on a roof of a vehicle for placing luggage, equipment, or other various items.

In the related art, a load-bearing function of a luggage rack is realized based on the following principle: the weight of a loaded cargo is transmitted to a longitudinal luggage rack through a connection portion between a lateral luggage rack and the longitudinal luggage rack, and the connection portion and the longitudinal luggage rack are mainly fixedly connected by bolt fastening, mechanical snap-fitting, or the like. The load transmitted to the longitudinal luggage rack is then dispersed by the structural design of the longitudinal luggage rack itself and further transmitted to a sheet-metal panel to achieve the final load-bearing function. In order to effectively transmit the load, the longitudinal luggage rack usually needs to be mounted and fixed to a roof sheet metal by 2 to 4 sets of supporting and fastening assembly structures composed of main components such as rivet nuts, studs, support pads, and sealing rings. In addition, to allow two lateral luggage racks arranged in a front-rear direction to be respectively and properly mounted on two longitudinal luggage racks located on opposite sides of the roof, an inner side wall of each longitudinal luggage rack needs to be additionally milled to form two mounting holes. At each mounting hole, a hex nut is riveted to be fastened together with a screw on the lateral luggage rack. A buffer pad needs to be designed on the lateral luggage rack to avoid direct hard contact with the longitudinal luggage rack, which would otherwise damage the surface coating of the longitudinal luggage rack, thereby leading to performance degradation, poor appearance, and even corrosion marks.

However, the assembly methods in the related art have high overall matching requirements, the longitudinal luggage rack is difficult to process, the production cycle is slow, and multiple additional components such as nuts need to be mounted, resulting in a high overall manufacturing and processing cost of the product. In addition, since a weight load of each lateral luggage rack is directly applied to the longitudinal luggage rack, the longitudinal luggage rack needs to have a sufficient structural strength, and the greater the weight load, the higher the required structural strength. A wall thickness and a shape of an extruded cross-sectional structure of the longitudinal luggage rack are the main factors affecting the overall structural strength thereof. The thicker the wall of the longitudinal luggage rack, the more complex the shape of the extruded cross-sectional structure, which not only increases a weight of the luggage rack assembly and exacerbates the manufacturing difficulty, leading to a further increase in product cost, but also does not conform to the current design concepts of lightweight and energy conservation and emission reduction in automobiles.

### SUMMARY

According to various embodiments of the present disclosure, the present disclosure provides a luggage rack, a luggage rack assembly, and a vehicle.

A luggage rack is configured to be mounted on a roof of a vehicle. The luggage rack includes:
a longitudinal luggage rack mounted on the roof, the longitudinal luggage rack being formed with a hole; and
a support member correspondingly extending through the hole, a bottom portion of the support member being connected to the roof, and a top portion of the support member being configured to be fixedly connected to a lateral luggage rack located outside the hole.

In one embodiment, the longitudinal luggage rack includes a housing and a rib plate connected to an inner wall of the housing, a wall thickness d1 of the housing is in a range of 0.8 mm to 1.0 mm, and a thickness d2 of the rib plate is in a range of 1.0 mm to 1.2 mm.

In one embodiment, an outer periphery of the support member is provided with a mounting portion, and the mounting portion is located below the rib plate and is fixedly connected to the rib plate.

In one embodiment, the mounting portion is a plate member arranged circumferentially around the support member, and the outer periphery of the support member is further provided with a first reinforcing member connected to the mounting portion.

In one embodiment, the luggage rack further includes a first fastener, and the first fastener extends through the roof and is fixedly connected to the support member.

In one embodiment, the luggage rack further includes a second reinforcing member that is fixedly connected to the roof and corresponding to a position of the support member.

In one embodiment, the luggage rack further includes a sealing ring, the first fastener includes a double-ended stud and a flange nut, opposite ends of the double-ended stud are respectively fixedly connected to the support member and the flange nut, the sealing ring is sleeved on the double-ended stud and extends through a first mounting hole of the roof, the flange nut is located on a side of the roof facing away from the support member and abuts against one end of the sealing ring, and an outer wall of the double-ended stud is provided with a limiting portion abutting against another end of the sealing ring.

In one embodiment, the luggage rack further includes a decorative cover detachably mounted at the hole, and the support member is detachably connected to the lateral luggage rack.

In one embodiment, when the decorative cover is mounted at the hole, a top surface of the decorative cover is coplanar with a top surface of the longitudinal luggage rack.

In one embodiment, the decorative cover is snap-fitted to the longitudinal luggage rack; and/or, an outer periphery of the decorative cover is formed with an avoidance groove recessed in a direction away from a hole wall of the hole.

A luggage rack assembly includes the luggage rack and a lateral luggage rack fixedly connected to the support member.

In one embodiment, an end of the lateral luggage rack is provided with a connecting bracket mounted on the top portion of the support member.

In one embodiment, the luggage rack further includes a second fastener, the connecting bracket is connected to a third reinforcing member, and the third reinforcing member abuts against a top surface of the support member and is fixedly connected to the support member through the second fastener.

In one embodiment, the connecting bracket includes a frame and at least one support foot fixedly connected to the frame, the frame is made of a rigid material and forms an assembly gap with a top surface of the longitudinal luggage rack, and the support foot is made of a soft material and tightly abuts against the top surface of the longitudinal luggage rack.

In one embodiment, two longitudinal luggage racks are provided opposite to and spaced apart from each other, two support members are provided and correspondingly arranged in holes of the two longitudinal luggage racks, respectively, and opposite ends of the lateral luggage rack are correspondingly connected to the two support members, respectively; and/or, the longitudinal luggage rack is provided with at least two holes that are spaced apart sequentially along a longitudinal direction X, at least two support members are provided, each of the support members is correspondingly arranged in a corresponding one of the holes, at least two lateral luggage racks are provided, and each of the lateral luggage racks is correspondingly connected to a corresponding one of the support members.

A vehicle includes the luggage rack assembly.

The details of one or more embodiments of the application are set forth in the accompanying drawings and the description below. Other features, objects, and advantages of the application will be apparent from the description and drawings, and from the claims.

### BRIEF DESCRIPTION OF THE DRAWINGS

FIG. 1 is a structural view of a luggage rack assembly mounted on a roof of a vehicle according to an embodiment of the present disclosure.
FIG. 2 is an enlarged view of part A of the structure shown in FIG. 1.
FIG. 3 is a cross-sectional view of the structure shown in FIG. 2 taken along line B-B.
FIG. 4 is an enlarged view of part C of the structure shown in FIG. 3.
FIG. 5 is a structural view of the luggage rack assembly with a lateral luggage rack removed according to an embodiment of the present disclosure.
FIG. 6 is an enlarged view of part D of the structure shown in FIG. 5.
FIG. 7 is a cross-sectional view taken along line E-E of FIG. 6.
FIG. 8 is a cross-sectional view taken along line F-F of FIG. 6.

10, roof; 20, longitudinal luggage rack; 201, hole; 202, hook; 21, housing; 211, top wall; 22, rib plate; 30, support member; 31, mounting portion; 32, first reinforcing member; 33, step; 40, lateral luggage rack; 41, connecting bracket; 411, frame; 412, support foot; 413, assembly gap; 42, lateral support bar; 43, third reinforcing member; 51, connecting member; 52, first fastener; 521, double-ended stud; 522, flange nut; 53, second reinforcing member; 54, sealing ring; 55, second fastener; 60, decorative cover; 601, buckle; 602, avoidance groove; 61, cover plate; 62, surrounding plate; 63, first buffer member; 70, second buffer member.

### DETAILED DESCRIPTION OF THE EMBODIMENTS

In order to make the above objectives, features and advantages of the present disclosure clear and easier to understand, the specific embodiments of the present disclosure are described in detail below in combination with the accompanying drawings. Many specific details are set forth in the following description to facilitate a full understanding of the present disclosure. However, the present disclosure can be implemented in many ways different from those described herein, and those skilled in the art can make similar improvements without departing from the connotation of the present disclosure. Therefore, the present disclosure is not limited by the specific embodiments disclosed below.

In the related art, only when a longitudinal luggage rack has a sufficient structural strength, the weight load can be increased. The thicker a wall of the longitudinal luggage rack, the more complex a shape of an extruded cross-sectional structure thereof, which will increase a weight of the luggage rack assembly and exacerbate the manufacturing difficulty, leading to a further increase in product cost.

In view of the above, the present disclosure provides a luggage rack, a luggage rack assembly, and a vehicle. A mounting structure of a lateral luggage rack in the related art is optimized, and a load-bearing support point of a longitudinal luggage rack is transferred from a side portion to a top portion, thereby effectively reducing the uneven stress distribution caused by the mutual tension of the longitudinal luggage rack due to the central distribution of the weight load. Moreover, this uneven stress distribution requires strengthening of the overall structural strength of the longitudinal luggage rack to ensure the safety and effectiveness of the weight load. By arranging fastening points at the top of the longitudinal luggage rack in the present disclosure, only a local structure in an area where the fastening points are located needs to be reinforced. Under the premise of ensuring an effective load-bearing function, the structure of the luggage rack assembly can be simplified, the number of mounted components can be reduced, the overall weight of the luggage rack assembly can be reduced, the shape and structure can be optimized, the production and manufacturing cost can be lowered, and a true lightweight design for energy conservation and emission reduction and a reduction in the overall cost of the product can be achieved.

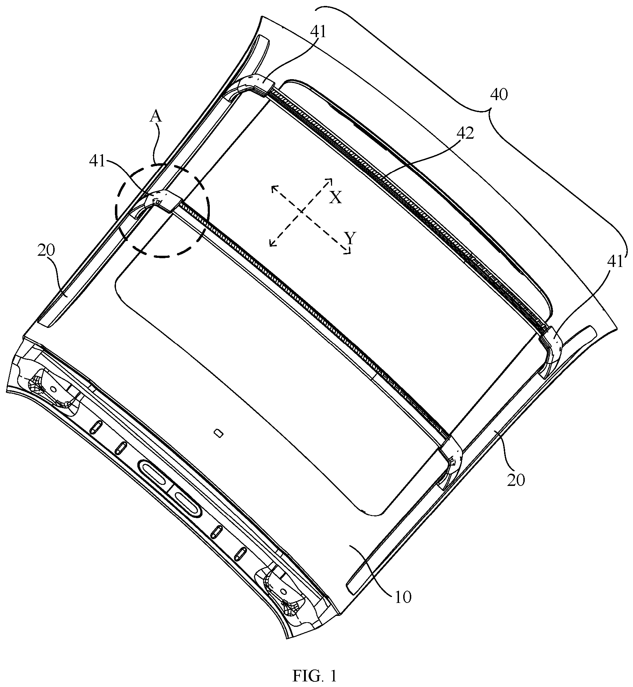

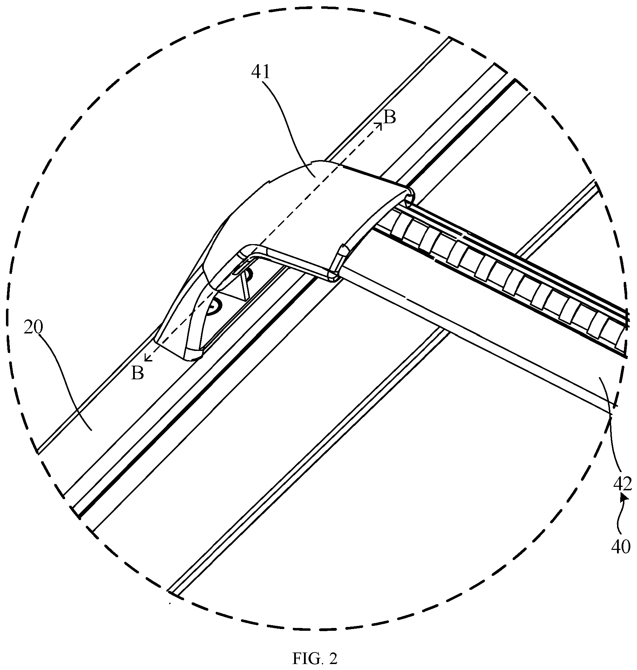

Referring to FIGS. 1 to 3, a luggage rack assembly provided according to an embodiment of the present disclosure is configured to be mounted on a roof 10 of a vehicle. The roof 10 includes, but is not limited to, a sheet-metal panel. The luggage rack assembly includes a luggage rack and a lateral luggage rack 40. The luggage rack includes a longitudinal luggage rack 20 and a support member 30. The longitudinal luggage rack 20 is mounted on the roof 10, and the longitudinal luggage rack 20 is formed with a hole 201. A top surface of the longitudinal luggage rack 20 refers to a side surface of the longitudinal luggage rack 20 facing away from the roof 10, and a bottom surface of the longitudinal luggage rack 20 refers to a side surface of the longitudinal luggage rack 20 adjacent to the roof 10. The support member 30 correspondingly extends through the hole 201, and a bottom portion of the support member 30 is connected to the roof 10. A top portion of the support member 30 is fixedly connected to the lateral luggage rack 40 located outside the hole 201 and is configured to support luggage.

It should be noted that a longitudinal direction X of the longitudinal luggage rack 20 includes, but is not limited to, a direction along a moving direction of the vehicle, that is, a direction from a rear end of the vehicle to a front end of the vehicle. A lateral direction Y of the lateral luggage rack 40 includes, but is not limited to, a direction perpendicular to the moving direction of the vehicle and parallel to the roof 10, that is, a direction from a left side of the vehicle to a right side of the vehicle.

In the above-described luggage rack assembly, the manner of transferring the weight load of luggage to the roof 10 through the longitudinal luggage rack 20 in the related art is changed to that the load is directly borne by the support member 30 and transferred to the roof 10 through the optimized structural design of the luggage rack, and the longitudinal luggage rack 20 does not bear the load and only serves as a decorative component of the vehicle's appearance. Therefore, a wall thickness of the longitudinal luggage rack 20 can be reduced, the shape of the cross-sectional structure and the assembly method can be simplified, and the number of components can be reduced, thereby achieving a true lightweight design and a reduction in production and manufacturing cost of the product.

In some embodiments, as shown in FIG. 1, two longitudinal luggage racks 20 are provided opposite to and spaced apart from each other. Two support members 30 are provided and correspondingly arranged in the holes 201 of the two longitudinal luggage racks 20, respectively. Opposite ends of the lateral luggage rack 40 are correspondingly connected to the two support members 30, respectively. Specifically, the lateral luggage rack 40 includes a lateral support bar 42 and two connecting brackets 41 respectively fixedly connected to opposite ends of the lateral support bar 42. Each of the connecting brackets 41 is correspondingly fixedly connected to a corresponding one of the support members 30. In this way, the weight load on the lateral luggage rack 40 is transmitted to the two support members 30 through the two connecting brackets 41, respectively, and is transmitted to the roof 10 by the two support members 30. In other words, both ends of the lateral luggage rack 40 can be stably supported by the roof 10.

In some embodiments, the longitudinal luggage rack 20 is provided with at least two holes 201 that are spaced apart sequentially along the longitudinal direction X. At least two support members 30 are provided, and each of the at least two support members 30 is correspondingly arranged in a corresponding hole of the at least two holes 201. At least two lateral luggage racks 40 are provided, and each of the at least two lateral luggage racks 40 is correspondingly connected to a corresponding support members 30 of the at least two support members 30.

In a specific embodiment, as shown in FIG. 1, two longitudinal luggage racks 20 are provided opposite to and spaced apart from each other. Each longitudinal luggage rack 20 is provided with two holes 201 that are spaced apart sequentially along the longitudinal direction X. Four support members 30 are correspondingly provided, and the four support members 30 are respectively arranged in the four holes 201. Opposite ends of one lateral luggage rack 40 are respectively connected to two of the support members 30, and opposite ends of the other lateral luggage rack 40 are respectively connected to the other two support members 30.

In some embodiments, the longitudinal luggage rack 20 includes a housing 21 and a rib plate 22 connected to an inner wall of the housing 21. Both the housing 21 and the rib plate 22 extend along the longitudinal direction X, and the housing 21 and the rib plate 22 are integrally formed by, including but are not limited to, pultrusion of aluminum. The rib plate 22 is provided in the housing 21, so as to increase the structural strength of the housing 21. In addition, opposite sides of the rib plate 22 along the longitudinal direction X are respectively fixedly connected to the inner wall of the housing 21. The hole 201 not only extends through a top wall 211 of the housing 21, but also extends through the rib plate 22, so that the support member 30 can sequentially extend through the top wall 211 and the rib plate 22 and then be mounted on the roof 10.

Since the fastening point in the present disclosure is directly designed on the support member 30, that is, the weight load is directly applied to the support member 30 and transmitted to the roof 10 by the support member 30, the longitudinal luggage rack 20 does not bear the load of the lateral luggage rack 40. Therefore, the structural strength requirement of the longitudinal luggage rack 20 is not high, and the overall shape and structure design is more flexible, thereby not only enabling a maximum lightweight design of the luggage rack assembly. In some embodiments, a wall thickness d1 of the housing 21 is reduced from, for example, a conventional range of 2.0 mm to 2.5 mm to a range of 0.8 mm to 1.0 mm, including but not limited to 0.8 mm, 0.9 mm, and 1 mm. Certainly, the wall thickness d1 can also be set to any value other than 0.8 mm to 1.0 mm according to actual needs. In addition, a thickness d2 of the rib plate 22 is reduced from a conventional range of 2.5 mm to 3.0 mm to a range of 1.0 mm to 1.2 mm, including but not limited to 0.8 mm, 0.9 mm, and 1 mm. Certainly, the thickness d2 can also be set to any value other than 0.8 mm to 1.0 mm according to actual needs. It can be seen that the overall thinning rate of the longitudinal luggage rack 20 reaches more than 60%, and the weight of the longitudinal luggage rack 20 can be reduced by more than 50%. In addition, the number of components can be optimized, and the shape of the extruded cross-sectional structure of the longitudinal luggage rack 20 can be simplified, which is more conducive to processing and molding, thereby reducing the difficulty of production and manufacturing, so as to achieve a significant cost reduction and efficiency improvement.

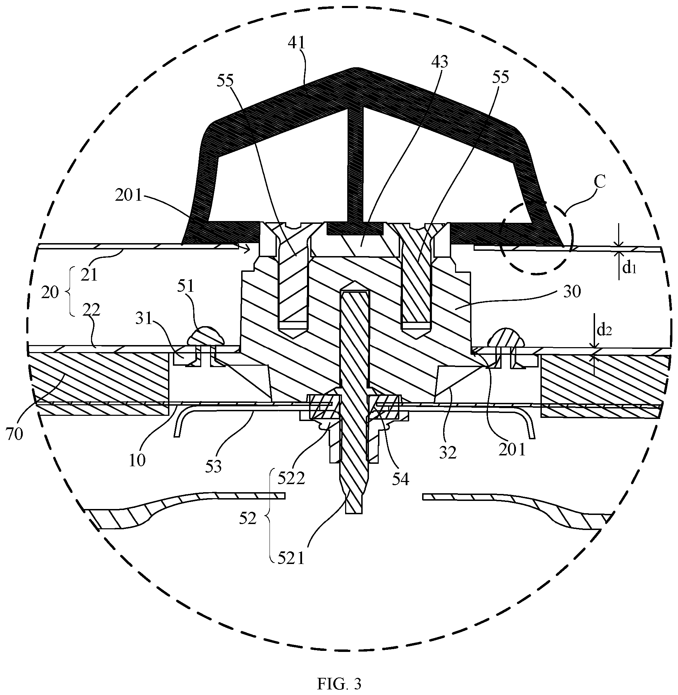

Referring to FIG. 3, in one embodiment, an outer periphery of the support member 30 is provided with a mounting portion 31. The mounting portion 31 may, but is not limited to, be arranged circumferentially around the support member 30. Alternatively, a plurality of mounting portions 31 are provided and spaced apart along the outer periphery of the support member 30. In addition, the mounting portion 31 is located below the rib plate 22 and is fixedly connected to the rib plate 22. In this way, on the one hand, the support member 30 is connected to the rib plate 22 through the mounting portion 31, so as to be fixedly mounted on the longitudinal luggage rack 20, which can improve the stability of the support member 30. On the other hand, since the mounting portion 31 of the support member 30 is located below the rib plate 22, the load borne by the support member 30 is not transmitted downward to the longitudinal luggage rack 20 through the rib plate 22, so that the lightweight design of the longitudinal luggage rack 20 can be satisfied.

Specifically, the luggage rack assembly further includes a connecting member 51. The mounting portion 31 is fixedly connected to the rib plate 22 through the connecting member 51. The number of the connecting member 51 includes, but is not limited to, one, two, three, four, or more. The mounting portion 31 is connected to the rib plate 22 through a plurality of first fasteners 52, which provides good stability. In addition, the connecting member 51 includes, but is not limited to, a screw, a pin, a rivet, etc. In this embodiment, the connecting member 51 is specifically, for example, a blind rivet, which has high assembly efficiency. Certainly, the mounting portion 31 is not limited to the above-mentioned manner of being fixedly connected to the rib plate 22 by the connecting member 51, and may also be fixedly connected to the rib plate 22 by various means such as bonding, welding, and snap-fitting, which can be flexibly selected according to actual needs.

Referring to FIG. 3, in one embodiment, the mounting portion 31 is, for example, a plate member arranged circumferentially around the support member 30, and the outer periphery of the support member 30 is further provided with a first reinforcing member 32 connected to the mounting portion 31. Specifically, the first reinforcing member 32 includes, but is not limited to, a reinforcing rib, a reinforcing plate, a reinforcing column, a reinforcing rod, etc., as long as the structural strength of the mounting portion 31 can be increased, so as to improve the overall mounting stability.

It should be noted that there are many ways to fix the support member 30 on the roof 10, including but not limited to adhesive fixing, snap-fit fixing, welding fixing, riveting fixing, threaded connection fixing, etc., which can be flexibly adjusted and set according to actual needs.

Referring to FIG. 3, in one embodiment, the luggage rack assembly further includes a first fastener 52. The first fastener 52 extends through the roof 10 and is fixedly connected to the support member 30. The first fastener 52 includes, but is not limited to, a screw, a pin, a rivet, etc.

In one embodiment, the luggage rack assembly further includes a second reinforcing member 53 that is fixedly connected to the roof 10 and corresponding to a position of the support member 30. In this way, the second reinforcing member 53 can increase the structural strength of the roof 10 and prevent the roof 10 from being deformed and damaged due to excessive local force. Specifically, the second reinforcing member 53 includes, but is not limited to, a reinforcing plate, a reinforcing block, a reinforcing rod, etc. In addition, during mounting, the second reinforcing member 53 and the support member 30 are fixedly connected to the roof 10 together by a second fastener 55, so that the mounting efficiency is higher compared to the second reinforcing member 53 and the support member 30 being respectively mounted and fixed to the roof 10.

It should be noted that the second reinforcing member 53 is provided corresponding to the position of the support member 30, means that a projection of the second reinforcing member 53 along a thickness direction of the roof 10 at least partially overlaps or completely overlaps with a projection of the support member 30.

In one embodiment, the luggage rack assembly further includes a sealing ring 54. The first fastener 52 includes a double-ended stud 521 and a flange nut 522. Opposite ends of the double-ended stud 521 are respectively fixedly connected to the support member 30 and the flange nut 522. The sealing ring 54 is sleeved on the double-ended stud 521 and extends through a first mounting hole of the roof 10. The flange nut 522 is located on a side of the roof 10 facing away from the support member 30 and abuts against one end of the sealing ring 54. An outer wall of the double-ended stud 521 is provided with a limiting portion abutting against the other end of the sealing ring 54. In this way, not only the support member 30 can be stably mounted on the roof 10, but also the sealing performance is improved by the provision of the sealing ring 54, and the mounting operation is convenient and quick.

In one embodiment, an end of the horizontal luggage rack 40 is provided with a connecting bracket 41. The connecting bracket 41 is mounted on a top portion of the support member 30. In use, the load borne by the lateral luggage rack 40 will be transmitted downward to the support member 30 through the connecting bracket 41, and transmitted downward to the roof 10 by the support member 30.

The connecting bracket 41 can be detachably mounted on the top portion of the support member 30, so that the lateral luggage rack 40 can be removed when the lateral luggage rack 40 is not needed. The connecting bracket 41 can alternatively be non-detachably mounted on the top portion of the support member 30. In this embodiment, the connecting bracket 41 is specifically detachably mounted on the top portion of the support member 30. When not in use, the lateral luggage rack 40 can be removed, and then, for example, a decorative cover 60 can be provided at the mounting position of the connecting bracket 41 to shield the mounting position, thereby improving the appearance effect of the product.

Referring to FIG. 3, in one embodiment, the luggage rack assembly further includes a second fastener 55. The connecting bracket 41 is connected to a third reinforcing member 43, which abuts against a top surface of the support member 30 and is fixedly connected to the support member 30 through the second fastener 55. In this way, the structural strength of the third reinforcing member 43 is greater than the structural strength of the connecting bracket 41, that is, the structural strength of the third reinforcing member 43 is relatively large, so that the connection stability between the connecting bracket 41 and the support member 30 can be improved, and vibration and loosening defects can be reduced.

Optionally, the third reinforcing member 43 is made of, but not limited to, metal materials such as aluminum, iron, copper, and alloys thereof, with relatively large structural strength, and is not prone to deformation and damage. Certainly, some hard non-metallic materials with relatively large strength can also be selected according to actual needs, for example, hard plastic plates, hard resin plates, ceramic plates, etc.

In some embodiments, the third reinforcing member 43 may, but is not limited to, be embedded and fixed at a bottom portion of the connecting bracket 41, specifically, for example, be integrally injection-molded with the connecting bracket 41, which has high production efficiency, a stable fixing effect, and relatively high appearance quality. The third reinforcing member 43 can also be adhesively fixed to the bottom portion of the connecting bracket 41 or fixed to the bottom portion of the connecting bracket 41 by other means.

The support member 30 includes, but is not limited to, a supporting block, a supporting column, a supporting rod, etc. The third reinforcing member 43 includes, but is not limited to, a reinforcing plate, which is stacked on the top surface of the support member 30, and is fixedly connected to the support member 30 by the second fastener 55 extending through the reinforcing plate. Optionally, the second fastener 55 includes, but is not limited to, a screw, a pin, a rivet, a snap-fitting member, etc., which can be flexibly adjusted and set according to actual needs, and is not limited herein. In this embodiment, the first fastener 52 is, for example, a screw, and a mounting hole for cooperating with the screw is formed on the top surface of the support member 30. In addition, the number of the second fastener 55 includes, but is not limited to, one, two, three, or more.

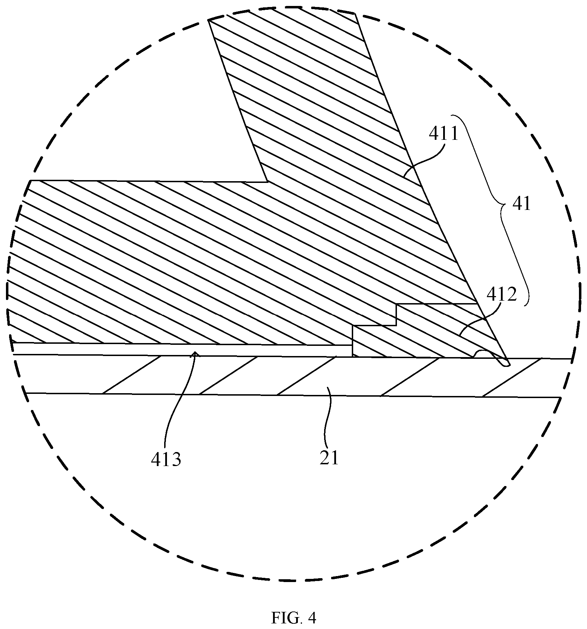

Referring to FIGS. 3 and 4, in one embodiment, the connecting bracket 41 includes a frame 411 and at least one support foot 412 fixedly connected to the frame 411. The frame 411 is made of a rigid material and forms an assembly gap 413 with the top surface of the longitudinal luggage rack 20. The support foot 412 is made of a soft material and tightly abuts against the top surface of the longitudinal luggage rack 20. Specifically, the support foot 412 is arranged circumferentially around a periphery of a bottom surface of the frame 411, so as to protrude below the bottom surface of the frame 411. In this way, during assembly, the connecting bracket 41 tightly abuts against the longitudinal luggage rack 20 through the support foot 412 made of a soft material to play a supporting role, while the frame 411 made of a rigid material is not in contact with the top surface of the longitudinal luggage rack 20 due to the assembly gap 413, so as to effectively avoid unnecessary surface scratching and coating damage to the longitudinal luggage rack 20 caused by the connecting bracket 41 during assembly. In addition, the support foot 412 and the longitudinal luggage rack 20 are designed with a certain amount of interference, and the soft material can be deformed under force, so that, in addition to avoiding the above-mentioned scratching and coating damage, wind noise caused by a gap at an overlapping position with the top surface of the support member 30 can be avoided. In addition, the frame 411 is made of a rigid material, so that the connecting bracket 41 can be ensured to have sufficient load-bearing strength, and luggage can be stably supported.

In some embodiments, the frame 411 and the support foot 412 are, but are not limited to, integrally molded by two-material injection molding. In this way, not only the production efficiency is relatively high, but also a stable connection between the frame 411 and the support foot 412 can be achieved. Certainly, the frame 411 can also be adhesively fixed to the support foot 412, or the frame 411 and the support foot 412 are fixedly connected by pins, rivets, screws, snap-fitting members, etc.

In a specific embodiment, the support member 30 is assembled and fixed from bottom to top during mounting. The connecting bracket 41 is fixedly fastened to the support member 30 through the second fastener 55, and the support member 30 is fastened and fixed to the roof 10 through the double-ended stud 521 and the flange nut 522. The weight load is transmitted from top to bottom, so that the longitudinal luggage rack 20 does not directly bear the load, and the load can be directly transmitted to the roof sheet metal by the support block.

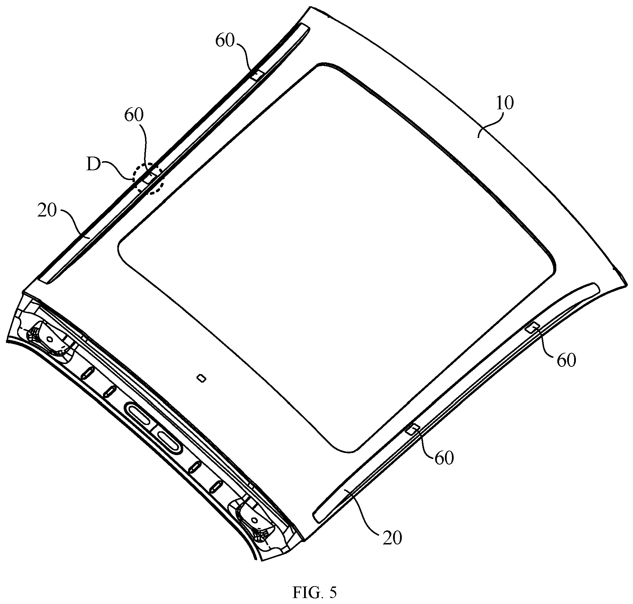

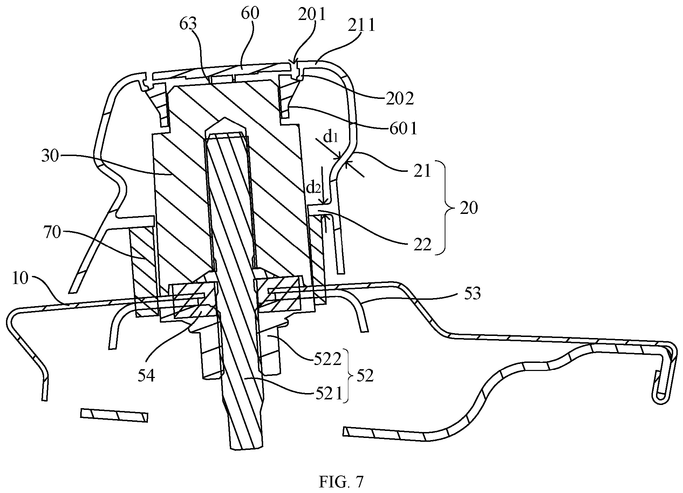

Referring to FIGS. 5 to 8, in one embodiment, when the lateral luggage rack 40 is not mounted on the vehicle, in order not to affect the appearance of the vehicle, the luggage rack assembly further includes a decorative cover 60 detachably mounted at the hole 201. The lateral luggage rack 40 is detachably connected to the support member 30. After the lateral luggage rack 40 is detached from the support member 30, the decorative cover 60 is mounted at the hole 201, so that the mounting position on the support member 30 for the lateral luggage rack 40 can be shielded, thereby improving the appearance quality of the product.

In one embodiment, when the decorative cover 60 is mounted at the hole 201, a top surface of the decorative cover 60 is coplanar with a top surface of the longitudinal luggage rack 20. In this way, the integrity of the top surface of the longitudinal luggage rack 20 can be achieved, the appearance quality of the product can be improved, and the overall shape of the longitudinal luggage rack 20 is not affected.

Certainly, in some embodiments, the top surface of the decorative cover 60 may also be slightly lower than or higher than the top surface of the longitudinal luggage rack 20, which can be flexibly adjusted and set according to actual needs, and is not limited herein.

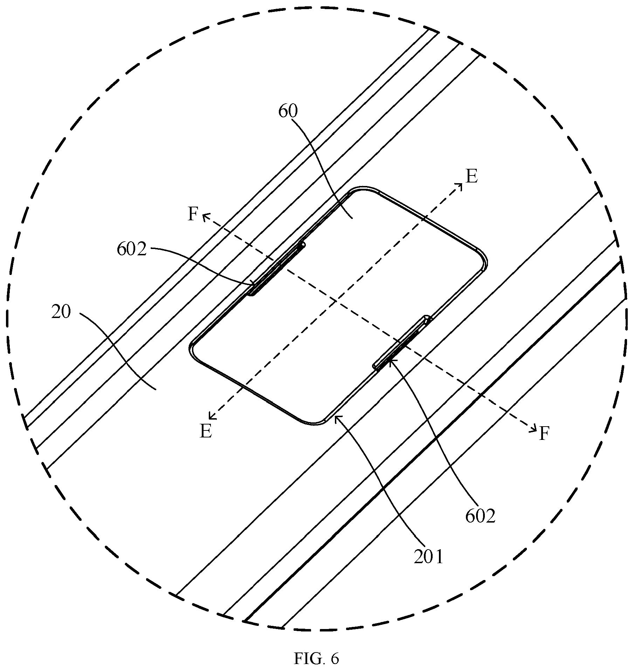

Referring to FIGS. 6 to 8, in one embodiment, the decorative cover 60 and the longitudinal luggage rack 20 are connected by, but not limited to, a snap-fit connection. Specifically, the longitudinal luggage rack 20 is provided with a hook 202, and the decorative cover 60 is provided with a buckle 601 snap-fitted with the hook 202. When the buckle 601 and the hook 202 are snap-fitted with each other, the buckle 601 can be prevented from coming off naturally.

Referring to FIGS. 6 to 8, in one embodiment, an outer periphery of the decorative cover 60 is formed with avoidance grooves 602 recessed in a direction away from a hole wall of the hole 201. Specifically, two avoidance grooves 602 are provided and are formed, for example, on opposite sides of the decorative cover 60, respectively. In this way, the avoidance grooves 602 provide an operating space, which is convenient for prying open and removing the decorative cover 60, and then mounting the lateral luggage rack 40 on the support member 30.

Referring to FIGS. 6 to 8, in some embodiments, the decorative cover 60 includes a cover plate 61 and a surrounding plate 62 connected to the cover plate 61. A step 33 is formed on the support member 30, and the surrounding plate 62 and the step 33 abut against each other to play a limiting role. In addition, at least one first buffer member 63 is provided on a side of the cover plate 61 facing the support member 30. The first buffer member 63 abuts against the top surface of the support member 30 to play a limiting role. The first buffer member 63 includes, but is not limited to, a protrusion provided on a surface of the cover plate 61.

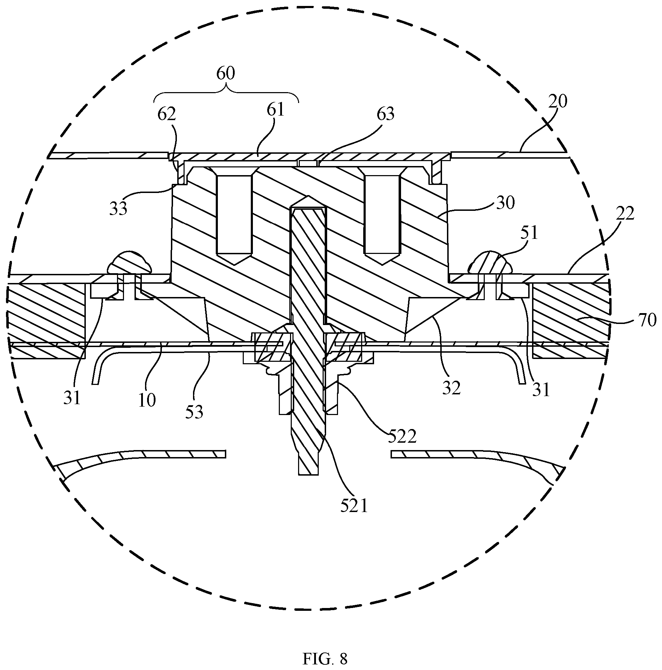

Referring to FIG. 3 or FIG. 8, in some embodiments, the luggage rack assembly further includes a second buffer member 70. The longitudinal luggage rack 20 is connected to the roof 10 through the second buffer member 70. The second buffer member 70 includes, but is not limited to, foam.

In one embodiment, a vehicle includes, but is not limited to, an automobile, for example, a car, a bus, a truck, a passenger car, etc., and the vehicle includes the luggage rack assembly of any of the above embodiments.

In the above-described vehicle, the manner of transferring the weight load of luggage to the roof 10 through the longitudinal luggage rack 20 in the related art is changed to that the load is directly borne by the support member 30 and transferred to the roof 10 through the optimized structural design of the luggage rack, and the longitudinal luggage rack 20 does not bear the load and only serves as a decorative component of the vehicle's appearance. Therefore, the wall thickness of the longitudinal luggage rack 20 can be reduced, the shape of the cross-sectional structure and the assembly method can be simplified, and the number of components can be reduced, thereby achieving a true lightweight design and a reduction in production and manufacturing cost of the product.

The above-mentioned embodiments only express several implementation manners of the present disclosure, and the description thereof is relatively specific and detailed, but should not be understood as limiting the scope of the patent disclosure. It should be noted that for those of ordinary skill in the art, several modifications and improvements can be made without departing from the concept of the present disclosure, and these modifications and improvements all fall within the protection scope of the present disclosure. Therefore, the protection scope of the present disclosure shall be subject to the appended claims.

## Claims

1. A luggage rack configured to be mounted on a roof of a vehicle, the luggage rack comprising:
a longitudinal luggage rack mounted on the roof, the longitudinal luggage rack being formed with a hole; and
a support member correspondingly extending through the hole, a bottom portion of the support member being connected to the roof, and a top portion of the support member being configured to be fixedly connected to a lateral luggage rack located outside the hole.

2. The luggage rack according to claim 1, wherein the longitudinal luggage rack comprises a housing and a rib plate connected to an inner wall of the housing, a wall thicknessd1 of the housing is in a range of 0.8 mm to 1.0 mm, and a thicknessd2 of the rib plate is in a range of 1.0 mm to 1.2 mm.

3. The luggage rack according to claim 2, wherein an outer periphery of the support member is provided with a mounting portion, and the mounting portion is located below the rib plate and is fixedly connected to the rib plate.

4. The luggage rack according to claim 3, wherein the mounting portion is a plate member arranged circumferentially around the support member, and the outer periphery of the support member is further provided with a first reinforcing member connected to the mounting portion.

5. The luggage rack according to any one of claims 1 to 5, further comprising a first fastener, wherein the first fastener extends through the roof and is fixedly connected to the support member.

6. The luggage rack according to claim 5, further comprising a second reinforcing member fixedly connected to the roof and corresponding to a position of the support member.

7. The luggage rack according to claim 5 or 6, further comprising a sealing ring, wherein the first fastener comprises a double-ended stud and a flange nut, opposite ends of the double-ended stud are respectively fixedly connected to the support member and the flange nut, the sealing ring is sleeved on the double-ended stud and extends through a first mounting hole of the roof, the flange nut is located on a side of the roof facing away from the support member and abuts against one end of the sealing ring, and an outer wall of the double-ended stud is provided with a limiting portion abutting against another end of the sealing ring.

8. The luggage rack according to any one of claims 1 to 7, wherein the luggage rack further comprises a decorative cover detachably mounted at the hole, and the support member is detachably connected to the lateral luggage rack.

9. The luggage rack according to claim 8, wherein when the decorative cover is mounted at the hole, a top surface of the decorative cover is coplanar with a top surface of the longitudinal luggage rack.

10. The luggage rack according to claim 8 or 9, wherein the decorative cover is snap-fitted to the longitudinal luggage rack;
and/or, an outer periphery of the decorative cover is formed with an avoidance groove recessed in a direction away from a hole wall of the hole.

11. A luggage rack assembly, comprising the luggage rack according to any one of claims 1 to 10, and a lateral luggage rack fixedly connected to the support member.

12. The luggage rack assembly according to claim 11, wherein an end of the lateral luggage rack is provided with a connecting bracket mounted on the top portion of the support member.

13. The luggage rack assembly according to claim 12, wherein the luggage rack further comprises a second fastener, the connecting bracket is connected to a third reinforcing member, and the third reinforcing member abuts against a top surface of the support member and is fixedly connected to the support member through the second fastener.

14. The luggage rack assembly according to claim 12 or 13, wherein the connecting bracket comprises a frame and at least one support foot fixedly connected to the frame, the frame is made of a rigid material and forms an assembly gap with a top surface of the longitudinal luggage rack, and the support foot is made of a soft material and tightly abuts against the top surface of the longitudinal luggage rack.

15. The luggage rack assembly according to any one of claims 11 to 14, wherein two longitudinal luggage racks are provided opposite to and spaced apart from each other, two support members are provided and correspondingly arranged in holes of the two longitudinal luggage racks, respectively, and opposite ends of the lateral luggage rack are correspondingly connected to the two support members, respectively;
and/or, the longitudinal luggage rack is provided with at least two holes that are spaced apart sequentially along a longitudinal direction X, at least two support members are provided, each of the at least two support members is correspondingly arranged in a corresponding hole of the at least two holes, at least two lateral luggage racks are provided, and each of the at least two lateral luggage racks is correspondingly connected to a corresponding support member of the at least two support members.

16. A vehicle, comprising the luggage rack assembly according to any one of claims 11 to 15.
